# EUROPEAN PATENT APPLICATION

(11) **EP 3 862 637 A1**
(43) Date of publication of application: **11.08.2021**
(21) Application number: 20156002.6
(22) Date of filing: 07.02.2020
(51) Int. Cl.: F24D 10/00, F24D 11/00, F24D 19/10, F24F 5/00

(54) **A THERMAL STORAGE ASSEMBLY AND A CONTROLLER CONFIGURED TO CONTROL SUCH AN ASSEMBLY**

(71) Applicant: E.ON Sverige AB, 205 09 Malmö (SE)
(72) Inventor: Andersson, Harald, 242 72 Ludvigsborg (SE)
(74) Representative: AWA Sweden AB

(57) **Abstract**

A thermal storage assembly is provided. The thermal storage assembly comprises:
an accumulator tank (1) comprising a first thermal connection (3a) and a second thermal connection (3b);
wherein the first thermal connection (3a) is controllably connectable to a feed conduit (42) of a district heating grid (40) or to a return conduit (54) of a district cooling grid (50) via a first valve arrangement (10), and
wherein the second thermal connection (3b) is controllably connectable to a feed conduit (52) of a district cooling grid (50) or to a return conduit (44) of a district heating grid (40) via a second valve arrangement (20); and
a controller (30) configured to control the first valve arrangement (10) and second valve arrangement (20) such that either:
the first thermal connection (3a) and the feed conduit (42) of the district heating grid (40) are in thermal connection with each other and the second thermal connection (3b) and the return conduit (44) of the district heating grid (40) are in thermal connection with each other, or
the first thermal connection (3a) and the return conduit (54) of the district cooling grid (50) are in thermal connection with each other and the second thermal connection (3b) and the feed conduit (52) of the district cooling grid (50) are in thermal connection with each other

## Description

### Technical Field

The present invention relates to the field of thermal storage. More particularly, the present invention relates to a thermal storage assembly for a district heating grid and a district cooling grid, and a controller configured to control such an assembly.

### Background

District heating grids and district cooling grids are common today. Thermal storage for a district grids (such as a district heating grid or a district cooling grid) is known. Thermal storage, in an accumulator tank, for a district heating grid allows for a reserve of heat supply to build up at times when the district heating grid is operating at normal capacity or below normal capacity. The reserve of heat supply may then be used when the district heating grid is operating beyond normal capacity, such that the heat production of the district heating grid cannot supply the necessary heat otherwise. This leads to peak shaving, more efficiency and more reliable supply. Thermal storage, in an accumulator tank, for a district cooling grid works in an analogous manner although for the district cooling grid a thermal storage.

Many cities have a need for heat supply during the winter and cold supply during the summer, and thus make use of both a district heating grid and a district cooling grid. If each of the grids are to function optimally at all times, each grid will require a separate accumulator tank for thermal storage leaving a relatively large footprint.

Hence, there is a need for improvements in how to provide more efficient heating and cooling of a city.

### Summary

Thusly, the present invention strives to solve at least some of the above problems and to eliminate or at least mitigate some of the drawbacks of prior-art systems. This object has now been achieved in accordance with the invention by the novel technique set forth in the appended independent claims; preferred embodiments being defined in the related dependent claims.

A further object of the present invention is to provide a thermal storage assembly comprising an accumulator tank that is operable for both a district heating grid and a district cooling grid. According to a first aspect, the above and other objects of the invention are achieved, in full or in part, by a thermal storage assembly comprising: an accumulator tank comprising a first thermal connection and a second thermal connection; wherein the first thermal connection is controllably connectable to a feed conduit of a district heating grid or to a return conduit of a district cooling grid via a first valve arrangement, and wherein the second thermal connection is controllably connectable to a feed conduit of a district cooling grid or to a return conduit of a district heating grid via a second valve arrangement; and a controller configured to control the first valve arrangement and second valve arrangement such that either: the first thermal connection and the feed conduit of the district heating grid are in thermal connection with each other and the second thermal connection and the return conduit of the district heating grid are in thermal connection with each other, or the first thermal connection and the return conduit of the district cooling grid are in thermal connection with each other and the second thermal connection and the feed conduit of the district cooling grid are in thermal connection with each other.

The thermal storage assembly is adapted to manage flow of fluid at specific temperatures. The fluid may comprise liquids and/or gases. The fluid flows e.g. between heat/cooling production, district heating/cooling distribution and the accumulator tank. The fluid may e.g. be guided using fluid pipes that are preferably pressurized.

The thermal storage assembly may further comprise a first heat exchanger connectable to the feed conduit and/or return conduit of the district heating grid on one side of the heat exchanger and connectable to the feed conduit and/or return conduit of the district cooling grid on the other side of the heat exchanger.

The heat exchanger is beneficial in that it allows for the district heating grid and the district cooling grid to be hydraulically separate while still making use of the same components of the thermal storage assembly, such as the accumulator tank. It should be noted that any heat exchanger, such as ones comprised within heat pumps, may be used.

The thermal storage assembly may further comprise a second heat exchanger, wherein the first heat exchanger is connectable to the feed conduit and return conduit of the district heating grid on one side of the heat exchanger and the accumulator tank on the other side of the heat exchanger; and the second heat exchanger is connectable to the feed conduit and return conduit of the district cooling grid on one side of the heat exchanger and the accumulator tank on the other side of the heat exchanger.

A second heat exchanger is beneficial in that it allows for hydraulically separating the accumulator tank from either of the grids. This allows for the accumulator tank to e.g. have a separate pressure and/or fluid specifically adapted to store thermal energy and/or to switch between storing hot and cold thermal energy.

The first valve arrangement may comprise a first valve connecting the first thermal connection to the feed conduit of the district heating grid, a second valve controllably allowing fluid to flow from the return conduit of the district cooling grid to thermally connect it to the first thermal connection and a third valve allowing fluid to flow from the first thermal connection to thermally connect it to the return conduit of the district cooling grid; and wherein the second valve arrangement may comprise a fourth valve connecting the second thermal connection to the feed conduit of the district cooling grid, a fifth valve controllably allowing fluid to flow from the return conduit of the district heating grid to thermally connect it to the second thermal connection and a sixth valve controllably allowing fluid to flow from the second thermal connection to thermally connect it to the return conduit of the district heating grid.

This specific valve arrangement is beneficial in that it is simple and efficient. The thermal connection may occur e.g. by fluid carrying thermal energy or a lack thereof being transferred directly between different conduits and connections or by the fluid exchanging its thermal energy or lack thereof via a heat exchanger with fluid directly or indirectly connected with the intended component.

The thermal storage assembly may further comprise at least one pump arrangement configured to controllably increase the pressure of the return conduit of the district heating grid and/or the return conduit of the district cooling grid.

The pump arrangement is beneficial in that it allows for a simple way to fill the accumulator tank, which in turn may be used to access the stored heat/cold supply in an embodiment with a closed accumulator tank.

The thermal storage assembly may further comprise a second pump connected to the second valve, such that the second pump pumps fluid from the return conduit of the district cooling grid through the second valve to thermally connect it to the first thermal connection; and a fifth pump connected to the fifth valve, such that the fifth pump pumps fluid from the return conduit of the district heating grid through the fifth valve to thermally connect it to the second thermal connection.

Connecting the pumps to the valves is beneficial in that it is simple to control and maintain.

The thermal storage assembly may further comprise at least one pump arrangement configured to controllably pump fluid from the accumulator tank.

This pump arrangement is beneficial in that it allows for a simple way to access the stored heat/cold supply.

The thermal storage assembly may further comprise a first pump connected to the first valve, such that the first pump pumps fluid from the accumulator tank to thermally connect it to the feed conduit of the district heating grid; and comprising a fourth pump connected to the fourth valve, such that the fourth pump pumps fluid from the accumulator tank to thermally connect it to the feed conduit of the district cooling grid.

This pump arrangement is beneficial in that it allows for a simple way to access the stored heat/cold supply.

The first thermal connection may be on the upper region of the accumulator tank, the upper region being hotter than the lower region; and wherein the second thermal connection may be on the lower region of the accumulator tank, the lower region being colder than the upper region.

The different thermal connections are beneficial in that each thermal connection may be specifically adapted for a specific temperature range.

According to a second aspect, a controller is provided. The controller is configured to control a first valve arrangement and second valve arrangement such that either: a first thermal connection of an accumulator tank is in thermal connection with a feed conduit of a district heating grid via the first valve arrangement and a second thermal connection of an accumulator tank is in thermal connection with a return conduit of the district heating grid via the second valve arrangement, or the first thermal connection is in thermal connection with a return conduit of a district cooling grid via the first valve arrangement and a second thermal connection is in thermal connection with a feed conduit of the district cooling grid via the second valve arrangement.

The controller may be implemented e.g. as circuitry, algorithms, a regulatory unit or a server.

The first valve arrangement may comprise a first valve connecting the first thermal connection to the feed conduit of the district heating grid, a second valve controllably allowing fluid to flow from the return conduit of the district cooling grid to thermally connect it to the first thermal connection and a third valve allowing fluid to flow from the first thermal connection to thermally connect it to the return conduit of the district cooling grid; and the second valve arrangement may comprise a fourth valve connecting the second thermal connection to the feed conduit of the district cooling grid, a fifth valve controllably allowing fluid to flow from the return conduit of the district heating grid to thermally connect it to the second thermal connection and a sixth valve controllably allowing fluid to flow from the second thermal connection to thermally connect it to the return conduit of the district heating grid; wherein the controller is configured to either: open the first valve and second valve while keeping the other valves closed, open the first valve and third valve while keeping the other valves closed, open the fourth valve and fifth valve while keeping the other valves closed, or open the fourth valve and sixth valve while keeping the other valves closed.

This valve arrangement is simple and efficient, and the controller configuration allows for both the district heating grid and the district cooling grid to alternatively make use of the same accumulator tank.

The controller may further be configured to control a second pump connected to the second valve, such that the second pump pumps fluid from the return conduit of the district cooling grid through the second valve to thermally connect it to the first thermal connection; and to control a fifth pump connected to the fifth valve, such that the fifth pump pumps fluid from the return conduit of the district heating grid through the fifth valve to thermally connect it to the second thermal connection.

The pumps allow the controller to selectively pump fluid into the accumulator tank, which in an embodiment with a closed accumulator tank further pushes fluid out of the accumulator tank to thermally connect it to the feed conduit(s) as reserve supply of heat or cold, respectively.

The controller may further be configured to control a first pump connected to the first valve, such that the first pump pumps fluid from the accumulator tank to thermally connect it to the feed conduit of the district heating grid; and to control a fourth pump connected to the fourth valve, such that the fourth pump pumps fluid from the accumulator tank to thermally connect it to the feed conduit of the district cooling grid.

The pumps allow the controller to selectively pump fluid out of the accumulator tank to thermally connect it to the feed conduit(s) as reserve supply of heat or cold, respectively.

The first thermal connection may be on the upper region of the accumulator tank, the upper region being hotter than the lower region; and the second thermal connection may be on the lower region of the accumulator tank, the lower region being colder than the upper region.

The different thermal connections are beneficial in that each thermal connection may be specifically adapted for a specific temperature range, furthermore, each thermal connection may have specific needs regarding how they are controlled.

Other objectives, features and advantages of the present invention will appear from the following detailed disclosure, from the attached claims, as well as from the drawings. It is noted that the invention relates to all possible combinations of features.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

### Brief Description of the Drawings

By way of example, embodiments of the present invention will now be described with reference to the accompanying drawings, in which:
Fig. 1 shows a schematic for a thermal storage assembly according to an embodiment;
Fig. 2 shows a schematic for a thermal storage assembly according to an embodiment;
Fig. 3 shows a schematic for a thermal storage assembly according to an embodiment;
Fig. 4 shows a schematic for a thermal storage assembly according to an embodiment;
Fig. 5 shows a schematic for a thermal storage assembly according to an embodiment; and
Fig. 6 shows a schematic for a thermal storage assembly according to an embodiment.

### Detailed Description

Embodiments of the invention will now be described with reference to the accompanying drawings. The invention may, however, be embodied in many different forms and should not be construed as limited to the embodiments set forth herein. Rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

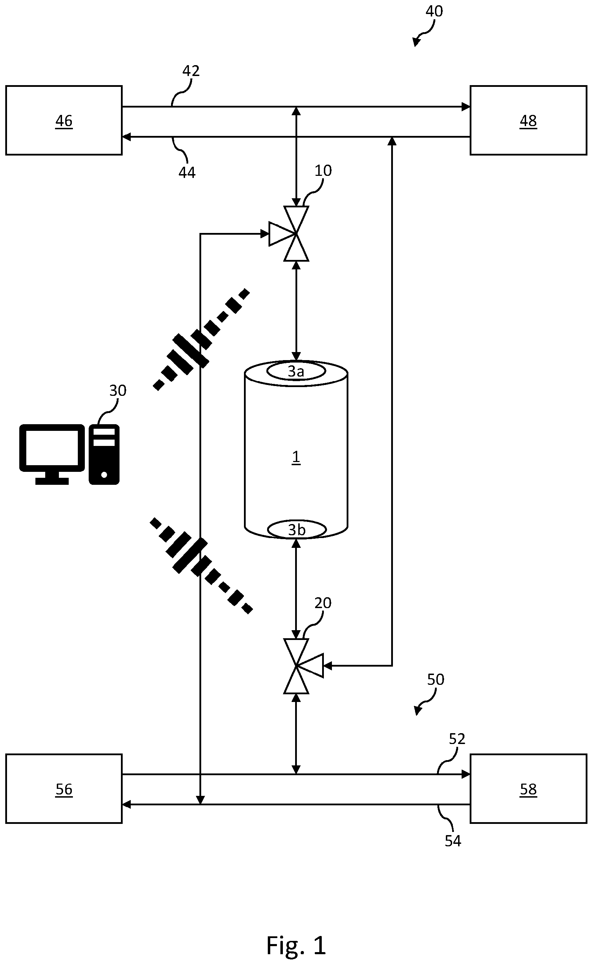

Starting in Fig. 1, a schematic for a thermal storage assembly is shown. The thermal storage assembly comprises an accumulator tank 1 and a controller 30. The thermal storage assembly is connectable to a district heating grid 40 and a district cooling grid 50 via a first valve arrangement 10 and a second valve arrangement 20.

The accumulator tank 1 comprises a first thermal connection 3a and a second thermal connection 3b. The thermal connections 3a, 3b connect the accumulator tank 1 with fluid pipes. The thermal connections 3a, 3b may e.g. be a pipe interface or an outlet/inlet. The thermal connections 3a, 3b may or may not comprise valves. The thermal connections 3a, 3b are controllably connectable to conduits of a district heating grid 40 and a district cooling grid 50.

The first thermal connection 3a is arranged at an upper region of the accumulator tank 1. The second thermal connection 3b is arranged at a lower region of the accumulator tank 1. The lower region is colder than the upper region.

The district heating grid 40 comprises heat production 46, e.g. a heat source, and district heating distribution 48, e.g. costumers in need of heat. The district heating grid 40 further comprises a feed conduit 42 transporting heat, i.e. hot fluid e.g. with a temperature of 95 °C, from the heat production 46 to the district heating distribution 48 and a return conduit 44 transporting used heat, i.e. cooled fluid e.g. with a temperature of 40 °C, from the district heating distribution 48 to the heat production 46.

The district cooling grid 50 comprises cooling production 56, e.g. a cooling source, and district cooling distribution 58, e.g. costumers in need of cooling. The district cooling grid 50 further comprises a feed conduit 52 transporting cooling, i.e. cold fluid e.g. with a temperature of 6 °C, from the cooling production 56 to the district cooling distribution 58 and a return conduit 54 transporting used cooling, i.e. heated fluid e.g. with a temperature of 16 °C, from the district cooling distribution 58 to the cooling production 56.

The temperatures mentioned above are merely examples and many alternatives are possible, such as a district heating grid 40 with feed/return temperatures of 70-120/30-40 °C and/or a district cooling grid 50 with feed/return temperatures of 6-10/16-30 °C.

The district feed conduits 42 and the return conduits 44 used in the district heating grid 40 are typically made of insulated steel pipes designed for a maximum pressure of 1,6 MPa and a maximum temperature of about 100-150°C. In this context, insulated shall be construed such that the pipes have an extra layer of heat insulating material wrapped around the same. As a non-limiting example, the steel pipes of the district feed conduits 42 and the return conduits 44 are insulated such that the conduits arranged in parallel in ground have a heat transfer coefficient lower than 1.5 Watt per meter Kelvin, W/(mK), preferably lower than 1.0 W/(mK). These values of the heat transfer coefficient are estimated when the district feed and return conduits 42, 44 are arranged in parallel within a distance of one meter from each other in ground having an average annual temperature of 8 °C and the arithmetic average temperature of the district feed and return conduits 42, 44 of 80-90 °C.

The conduits used in a district cooling grid 50 are normally plastic uninsulated conduits designed for a maximum pressure of either 0.6 or 1 MPa and a maximum temperature of about 50 °C. Also, the cooling fluid and hence energy carrier is typically water, although it is to be understood that other fluids or mixture of fluids may be used. Some non-limiting examples are ammonia, anti-freezing liquids (such as glycol), oils and alcohols. A non-limiting example of a mixture is water with an anti-freezing agent, such as glycol, added thereto.

The first thermal connection 3a is controllably connectable to the feed conduit 42 of the district heating grid 40 and to the return conduit 54 of the district cooling grid 50 via a first valve arrangement 10. The first valve arrangement 10 may comprise any number of valves that controllably allow fluid to flow through them or not. At a specific time, the first valve arrangement 10 is controlled such that the first thermal connection 3a is connected to the feed conduit 42 of the district heating grid 40, or connected to the return conduit 54 of the district cooling grid 50, or not connected to the feed conduit 42 of the district heating grid 40 or the return conduit 54 of the district cooling grid 50.

The second thermal connection 3b is controllably connectable to the feed conduit 52 of the district cooling grid 50 and to the return conduit 44 of the district heating grid 40 via a second valve arrangement 20. The second valve arrangement 20 may comprise any number of valves that controllably allow fluid to flow through them or not. At a specific time, the second valve arrangement 20 is controlled such that the second thermal connection 3b is connected to the feed conduit 52 of the district cooling grid 50, or connected to the return conduit 44 of the district heating grid 40, or not connected to the feed conduit 52 of the district cooling grid 50 or the return conduit 44 of the district heating grid 40.

The thermal storage assembly comprises a controller 30 configured to control the first valve arrangement 10 and second valve arrangement 20. The control may take effect using e.g. electrical signals, electromagnetic signals and/or mechanical signals.

The first and second valve arrangements 10, 20 may be controlled by the controller 30 such that the accumulator tank 1 is connected to either the district heating grid 40 or the district cooling grid 50. The first and second valve arrangements 10, 20 may further be controlled by the controller 30 such that the accumulator tank 1 is not connected to any of the either the district heating grid 40 or the district cooling grid 50.

In the case of connecting the accumulator tank 1 to the district heating grid 40, the first thermal connection 3a and the feed conduit 42 of the district heating grid 40 are in fluid connection with each other and the second thermal connection 3b and the return conduit 44 of the district heating grid 40 are in fluid connection with each other. The fluid connection allows for a thermal connection as the fluid may act as a thermal carrier. Further, the first thermal connection 3a and the return conduit 54 of the district cooling grid 50 are not in fluid connection with each other and the second thermal connection 3b and the feed conduit 52 of the district heating grid 40 are not in fluid connection with each other. This allows the accumulator tank 1 to be used as thermal storage for the district heating grid 40 while disconnecting the accumulator tank 1 from the district cooling grid 50.

In the case of connecting the accumulator tank 1 to the district cooling grid 50, the first thermal connection 3a and the return conduit 54 of the district cooling grid 50 are in fluid connection with each other and the second thermal connection 3b and the feed conduit 52 of the district cooling grid 50 are in fluid connection with each other. Further, first thermal connection 3a and the feed conduit 42 of the district heating grid 40 are not in fluid connection with each other and the second thermal connection 3b and the return conduit 44 of the district heating grid 40 are not in fluid connection with each other. This allows the accumulator tank 1 to be used as thermal storage for the district cooling grid 50 while disconnecting the accumulator tank 1 from the district heating grid 40.

This control system allows the same accumulator tank 1 to be selectably and alternatively connected to and operable with either the district heating grid 40 or the district cooling grid 50.

Prior art accumulator tanks are traditionally unused or not used for peak efficiency for half of the year, the present invention allows an accumulator tank 1 to be used at peak efficiency all year by e.g. connecting the accumulator tank 1 to the district heating grid 40 during the winter and to the district cooling grid 50 during the summer.

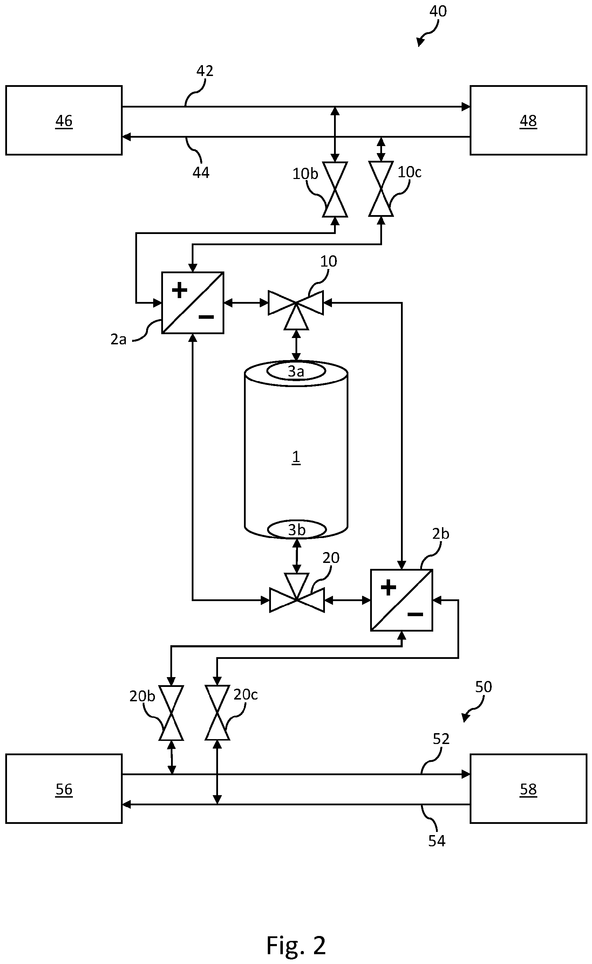

Fig. 2 shows a schematic for a thermal storage assembly. The controller 30 of the thermal storage assembly is not shown for clarity, however the first and second valve arrangement 10, 20 are controllable by the controller 30.

Compared to the schematic for a thermal storage assembly of Fig. 1, the thermal storage assembly of Fig. 2 further comprises a first heat exchanger 2a and a second heat exchanger 2b. The first and second heat exchangers are used to fluidly separate the accumulator tank 1 from the district heating grid 40 and district cooling grid 50, respectively.

Heat exchangers 2a, 2b as such are well known in the art and may basically be described as comprising an arrangement of a first circuit circulating a first fluid having a first temperature, and a second circuit circulating a second fluid having a second temperature. The first and second circuits closely abut each other along a respective extension thereof. By the two circuits along an extension closely abutting each other a heat transfer takes place between the first and second fluids.

The first heat exchanger 2a is connectable, at a first side thereof, to the feed conduit 42 and the return conduit 44 of the district heating grid 40. Further, the first heat exchanger 2a is connectable, at a second side thereof opposite the first side, to the accumulator tank 1. A valve 10b may be used to control a flow of heat transfer fluid between the feed conduit 42 of the district heating grid 40 and the first heat exchanger 2a. A valve 10c may be used to control a flow of heat transfer fluid between the return conduit 44 of the district heating grid 40 and the first heat exchanger 2a. For some installations only one of the valves 10b and 10c are installed.

The second heat exchanger 2b is connectable, at a first side thereof, to the feed conduit 52 and the return conduit 54 of the district cooling grid 50. Further, the second heat exchanger 2b is connectable, at a second side thereof opposite the first side, to the accumulator tank 1. A valve 20b may be used to control a flow of heat transfer fluid between the feed conduit 52 of the district cooling grid 40 and the second heat exchanger 2b. A valve 20c may be used to control a flow of heat transfer fluid between the return conduit 54 of the district cooling grid 50 and the second heat exchanger 2b. For some installations only one of the valves 20b and 20c are installed.

In order for the thermal storage assembly to be operable with the district heating grid 40, the valve arrangements 10, 20 may be controlled by the controller 30 to be open between the thermal connections 3a, 3b and the first heat exchanger 2a and be closed towards the second heat exchanger 2b. The valves 10b, 10c are also controlled by the controller 30 to be open. This allows fluid to flow to and/or from the feed conduit 42 and the return conduit 44 of the district heating grid 40 to the first side of the first heat exchanger 2a. On the second side of the first heat exchanger 2a, fluid of the accumulator tank 1 is allowed to flow. Hence, in this use case, the first and second thermal connections 3a, 3b are connected with the feed conduit 42 and the return conduit 44 of the district heating grid 40 through the first heat exchanger 2a. Further, the thermal energy of the fluid in the district heating grid 40 may be exchanged through the first heat exchanger 2a with the fluid being led through the first and second thermal connections 3a, 3b to and/or from the accumulator tank 1. Using the first heat exchanger 2a the district heating grid 40 may be hydraulically separate from both the district cooling grid 50 and the accumulator tank 1.

In order for the thermal storage assembly to be operable with the district cooling grid 50, the valve arrangements 10, 20 may be controlled by the controller 30 to be open between the thermal connections 3a, 3b and the second heat exchanger 2b and be closed towards the first heat exchanger 2a. The valves 20b, 20c are also controlled by the controller 30 to be open. This allows fluid to flow to and/or from the feed conduit 52 and the return conduit 54 of the district cooling grid 50 to the first side of the second heat exchanger 2b. On the second side of the second heat exchanger 2b, fluid of the accumulator tank 1 is allowed to flow. Hence, in this use case, the first and second thermal connections 3a, 3b are connected with the feed conduit 52 and the return conduit 54 of the district cooling grid 50 through the second heat exchanger 2b. Further, the thermal energy of the fluid in the district cooling grid 50 may be exchanged through the second heat exchanger 2b with the fluid being led through the first and second thermal connections 3a, 3b to and/or from the accumulator tank 1. Using the second heat exchanger 2b the district cooling grid 50 may be hydraulically separate from both the district heating grid 40 and the accumulator tank 1.

Depending on how the valve arrangements 10, 20 are controlled the accumulator tank 1 is alternately operable with either the district heating grid 40 or the district cooling grid 50. Note that the accumulator tank 1 may be set to not be operable with both of the district heating grid 40 and the district cooling grid 50 at the same time. Further, it may be beneficial to at least cool/heat the fluid within the accumulator tank 1 before a switch between the accumulator tank 1 is operable with the district heating grid 40 or the district cooling grid 50.

In embodiments without heat exchangers 2a, 2b, it may be preferred to further pressurize the accumulator tank 1 when switching between the district heating grid 40 and the district cooling grid 50. This since the fluid of the district heating grid 40 usually has a much higher pressure than the fluid of the district cooling grid 40.

By hydraulically separating the district heating grid 40 and the district cooling grid 50, the differences in pressure of the grids 40, 50 will not affect each other. By hydraulically separating the accumulator tank 1 from the district heating grid 40 and the district cooling grid 50, the accumulator tank 1 may have a pressure and fluid specifically adapted to easily or quickly switch between storing hot and cold thermal energy.

Each grid 40, 50 comprises heating/cooling distribution 48, 58. The heating/cooling distributions 48, 58 usually connect via heat exchangers to local energy distributing systems, such as a local energy distributing grid comprising a local feed conduit and a local return conduit, or directly to houses with e.g. radiators. The local energy distributing grid is configured to deliver local heat/cooling transfer fluid to local heating/cooling systems that are arranged in buildings, preferably residential homes but also other types of buildings such as office buildings, business premises and factories in need for heating/cooling. The distributed heat exchangers comprise a first circuit that forms part of the district heating/cooling grid 40, 50 and a second circuit that forms part of the local energy distributing grid.

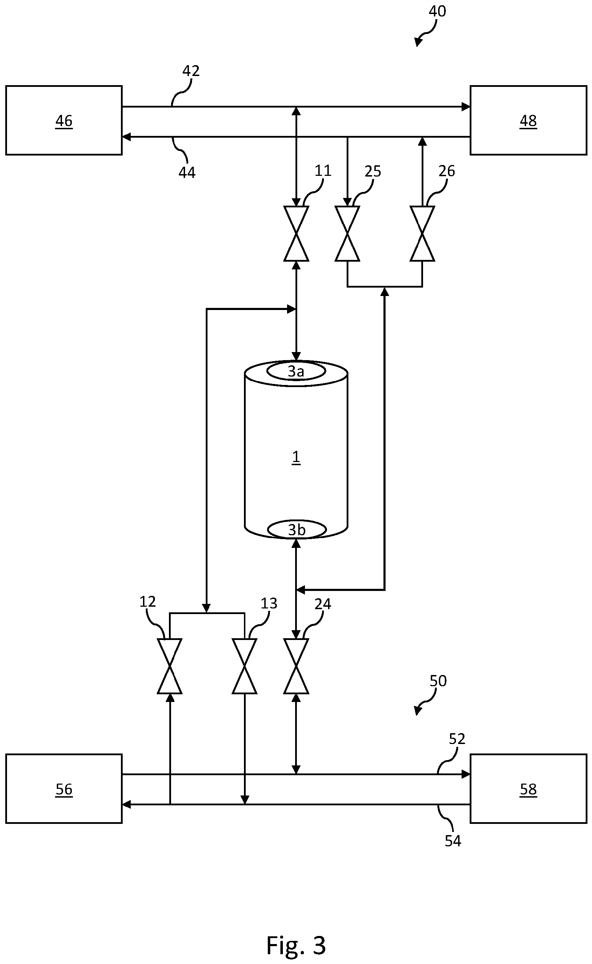

Fig. 3 shows a schematic for a thermal storage assembly. The controller 30 of the thermal storage assembly is not shown for clarity, however the valves shown 11-13, 24-26 are controllable by the controller 30.

The first valve arrangement 10 comprises a first valve 11 connecting the first thermal connection 3a to the feed conduit 42 of the district heating grid 40, a second valve 12 controllably allowing fluid to flow from the return conduit 54 of the district cooling grid 50 to the first thermal connection 3a and a third valve 13 allowing fluid to flow from the first thermal connection 3a to the return conduit 54 of the district cooling grid 50.

The second valve arrangement 20 comprises a fourth valve 24 connecting the second thermal connection 3b to the feed conduit 52 of the district cooling grid 50, a fifth valve 25 controllably allowing fluid to flow from the return conduit 44 of the district heating grid 40 to the second thermal connection 3b and a sixth valve 26 controllably allowing fluid to flow from the second thermal connection 3b to the return conduit 44 of the district heating grid 40.

In order for the thermal storage assembly to be operable with the district heating grid 40, the first, fifth and sixth valve 11, 25, 26 may be controlled by the controller 30 to be open and the second, third and fourth valve 12, 13, 24 are controlled by the controller 30 to be closed.

In order for the thermal storage assembly to be operable with the district cooling grid 50, the first, fifth and sixth valve 11, 25, 26 are controlled by the controller 30 to be closed and the second, third and fourth valve 12, 13, 24 may be controlled by the controller 30 to be open.

The parallel pairs of valves, i.e. the second and third valve 12, 13 and the fifth and sixth valve 25, 26, are either each connected to or configured to only allow fluid to flow in one direction, wherein each valve in each pair allows fluid to flow in opposite directions.

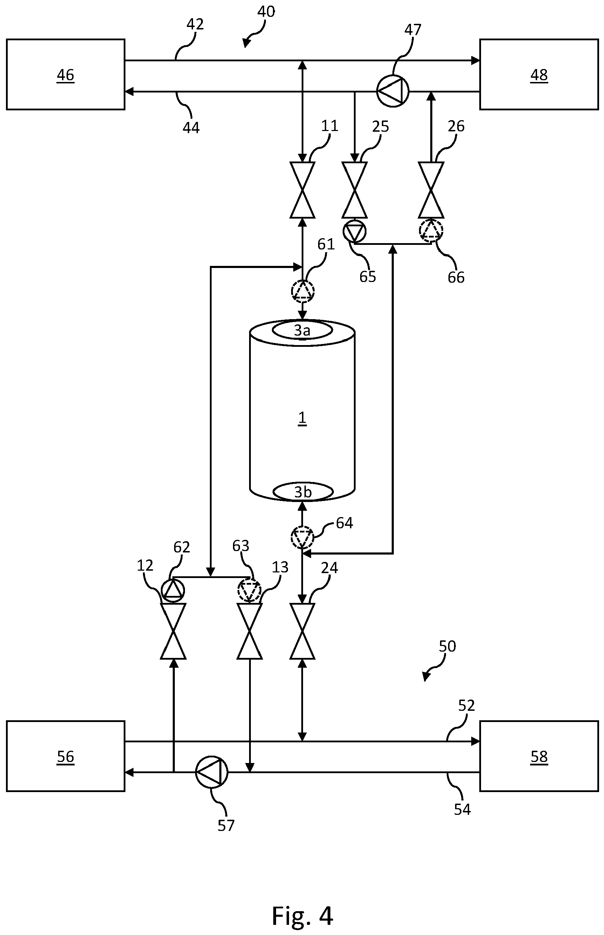

Fig. 4 shows a schematic for a thermal storage assembly. The controller 30 of the thermal storage assembly is not shown for clarity, however the valves shown 11-13, 24-26 and/or pumps 61-66 are controllable by the controller 30.

The thermal storage assembly further comprises at least one pump arrangement 60 configured to controllably increase the pressure of the return conduit 44 of the district heating grid 40 and/or the return conduit 54 of the district cooling grid 50.

In a reciprocal manner, the pump arrangement 60 may instead or additionally be configured to controllably decrease the pressure of the feed conduit 42 of the district heating grid 40 and/or the feed conduit 52 of the district cooling grid 50.

Fluid is circulated in the different grids 40, 50 by means of a pressure difference between the feed conduits 42, 52 and the return conduits 44, 54, wherein the pressure in the feed conduits 42, 52 is higher than the pressure in the return conduits 44, 54.

The driving pressure difference between the feed conduits 42, 52 and return conduits 44, 54 of the hydraulic network creates a so called "pressure cone" whereby the pressure in the feed conduits 42, 52 is higher than the pressure in the return conduits 44, 54. This pressure difference circulates the heating/cooling fluid in the hydraulic network between the district heating/cooling production 46, 56 and the heating/cooling distribution 48, 58. The pressure difference is highest near the district heating/cooling production 46, 56 and lowest near the heating/cooling distribution 48, 58. Because of this, one or more district grid circulation pumps may be arranged in the different grids 40, 50 in order to provide the driving pressure difference.

The pressure cone is represented by grid pumps 47, 57. Depending on where the accumulator tank 1 is locally placed, one of the grid pumps 47, 57 may represent the pressure difference created by the district heating/cooling production 46, 56.

In the prior art, the accumulator tank 1 is preferentially placed close to the district heating/cooling production 46, 56 to make use of this its pressure difference. However, the district heating production 46 is not always close to the district cooling production 56, so the innovative dual thermal storage concept of using the same accumulator tank 1 for both the district heating grid 40 and the district cooling grid 50 may sometime not make use of the pressure difference of both the district heating/cooling productions 46, 56. Hence, depending on where the accumulator tank 1 is locally placed, one or both of the grid pumps 47, 57 is an additional pump configured to create a pressure difference.

The thermal storage assembly comprises a second pump 62 connected to the second valve 12, such that the second pump 62 pumps fluid from the return conduit 54 of the district cooling grid 50 through the second valve 12 to the first thermal connection 3a; and a fifth pump 65 connected to the fifth valve 25, such that the fifth pump 65 pumps fluid from the return conduit 44 of the district heating grid 40 through the fifth valve 25 to the second thermal connection 3b.

These pumps 62, 65 may be directly integrated with the valves 12, 25 or hydraulically connected to them. The pumps 62, 65 allow fluid to flow from the return conduit 44, 54 through the accumulator tank 1 to the feed conduit 42, 52 despite the pressure normally being higher in the feed conduits 42, 52.

In an embodiment with a closed accumulator tank 1, no pump is needed to draw fluid out from the accumulator tank 1 as it will happen automatically as fluid is pumped into the accumulator tank 1 by the second or fifth pump 62, 65.

The thermal storage assembly may further comprise at least one pump arrangement 60 configured to controllably pump fluid from the accumulator tank 1. This may e.g. be useful when reconfiguring the accumulator tank 1 to move between being connected to the district heating grid 40 and being connected to the district cooling grid 50. In such an occurrence, it may be more efficient to replace the fluid in the accumulator tank 1 using the at least one pump arrangement 60 than to heat or cool the fluid.

The thermal storage assembly may further comprise a first pump 61 connected to the first valve 11, such that the first pump 61 pumps fluid from the accumulator tank 1 to the feed conduit 42 of the district heating grid 40; and comprise a fourth pump 64 connected to the fourth valve 24, such that the fourth pump 64 pumps fluid from the accumulator tank 1 to the feed conduit 52 of the district cooling grid 50.

This is especially beneficial in an embodiment with an open accumulator tank 1, as it allows fluid to be output from the accumulator tank 1 to at least one feed conduit 42, 52, despite the relatively high pressure of the feed conduit 42, 52.

The thermal storage assembly may optionally comprise a third pump 63 connected to the third valve 13, such that the third pump 63 pumps fluid from the accumulator tank 1 to the return conduit 54 of the district cooling grid 50; and a sixth pump 66 connected to the sixth valve 26, such that the sixth pump 66 pumps fluid from the accumulator tank 1 to the return conduit 44 of the district heating grid 40.

These pumps 63, 66 allow fluid to be output from the accumulator tank 1 to at least one return conduit 44, 54. However, in many embodiments the return conduits 44. 54 have a lower pressure than the feed conduits 42, 52 or the accumulator tank 1, the pumps 63, 66 are not necessary in this case.

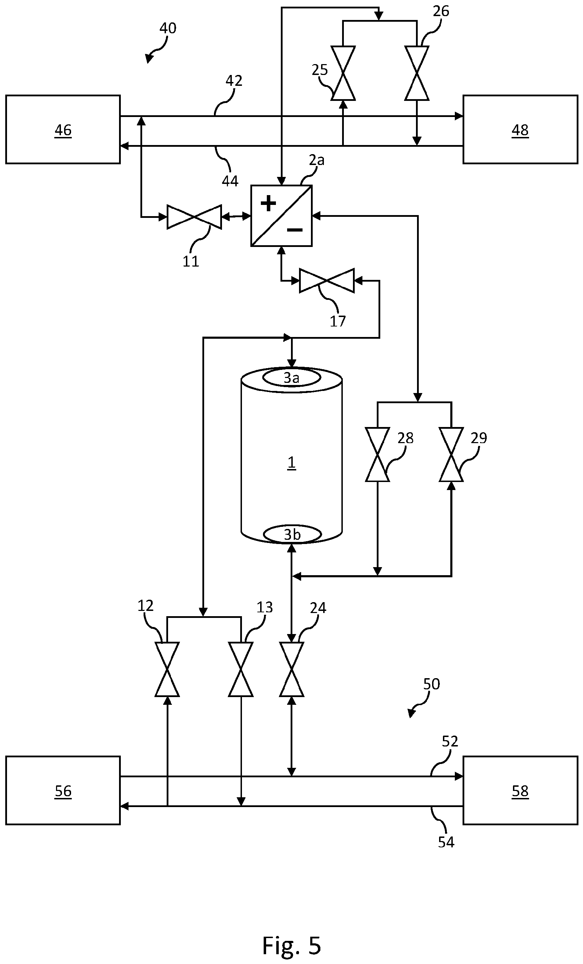

Fig. 5 shows a schematic for a thermal storage assembly. The controller 30 of the thermal storage assembly is not shown for clarity, however the valves shown 11-13, 17, 24-26, 28-29 are controllable by the controller 30. Pumps 61-66 are not shown for clarity, however they and other pumps may be present and may be controllable by the controller 30.

The thermal storage assembly of Fig. 5 comprises a single heat exchanger 2a connectable to the feed conduit 42 and/or return conduit 44 of the district heating grid 40 on one side of the heat exchanger 2a and connectable to the feed conduit 52 and/or return conduit 54 of the district cooling grid 50 on the other side of the heat exchanger 2a.

The heat exchanger 2a hydraulically separates the district heating grid 40 and the district cooling grid 50. The schematics of Fig. 5 show the fluid in the accumulator tank 1 to be the hydraulically connectable to the district cooling grid 50 and not hydraulically connectable to the district heating grid 40. In this embodiment, it is beneficial to keep the accumulator tank 1 at a similar pressure as the district cooling grid 50.

It should be obvious for a skilled person starting from the schematics shown in Fig. 5 to modify the connections such that the accumulator tank 1 may be connectable directly to the district heating grid 40 instead. In this embodiment, it is beneficial to keep the accumulator tank 1 at a similar pressure as the district heating grid 40.

When the thermal storage assembly is configured to work with the district heating grid 40, the controller 30 is configured to control the first valve arrangement 10 and second valve arrangement 20 according to the following:
When filling the accumulator tank 1 with heat, the first valve 11, the seventh valve 17, the ninth valve 29, and the sixth valve 26 are open and the rest are closed. Fluid from the feed conduit 42 of the district heating grid 40 flows to the heat exchanger 2a and heats fluid that flows from the heat exchanger 2a to the first thermal connection 3a. A pump may be controlled by the controller 30 to pump the fluid from the feed conduit 42, however the feed conduit 42 is relatively highly pressurized, so a pump is not usually needed. Colder fluid flows from the second thermal connection 3b, either being pushed out by the fluid entering at the first thermal connection 3a or being pumped out by a fourth pump 64 being controlled by the controller 30. The fluid flows from the second thermal connection 3b to the heat exchanger 2a via the ninth valve 29. This fluid cools fluid via the heat exchanger 2a flowing to the return conduit 44 of the district heating grid 40 via the sixth valve 26.

When drawing heat from the accumulator tank 1, the first valve 11, the seventh valve 17, the eighth valve 28, and the fifth valve 25 are open and the rest are closed. Fluid from the return conduit 44 of the district heating grid 40 flows to the heat exchanger 2a and cools fluid that flows from the heat exchanger 2a to the second thermal connection 3b via the eighth valve 28. A fifth pump 65 is preferably controlled by the controller 30 to pump the fluid from the return conduit 44. Hotter fluid flows from the first thermal connection 3a, either being pushed out by the fluid entering at the second thermal connection 3b or being pumped out by a first pump 61 being controlled by the controller 30. The fluid flows from the first thermal connection 3a to the heat exchanger 2a via the seventh valve 17. This fluid heats fluid via the heat exchanger 2a flowing to the feed conduit 42 of the district heating grid 40 via the first valve 11.

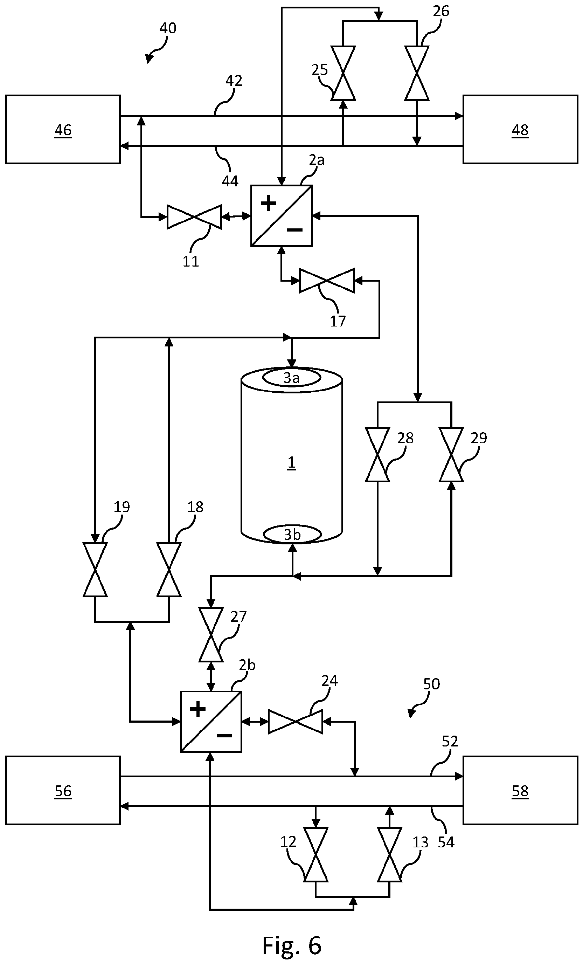

Fig. 6 shows a schematic for a thermal storage assembly. The controller 30 of the thermal storage assembly is not shown for clarity, however the valves shown 11-13, 17-19, 24-29 are controllable by the controller 30. Pumps 61-66 are not shown for clarity, however, they and other pumps may be present and may be controllable by the controller 30.

Compared to Fig. 5, the schematic of Fig. 6 further comprises a second heat exchanger 2b that hydraulically separates the accumulator tank 1 from the district cooling grid 50. The connections of the second heat exchanger 2b are similar to the connections of the first heat exchanger 2a and the new valves 18-19, 27 are controlled in a similar manner as their counterparts 17, 28-29.

The person skilled in the art realizes that the present invention by no means is limited to the preferred embodiments described above. On the contrary, many modifications and variations are possible within the scope of the appended claims.

For example, a thermal storage assembly may be provided not comprising the first heat exchanger 2a but instead only comprising the second heat exchanger 2b that hydraulically separates the accumulator tank 1 from the district cooling grid 50.

Additionally, variations to the disclosed embodiments can be understood and effected by the skilled person in practicing the claimed invention, from a study of the drawings, the disclosure, and the appended claims.

## Claims

1. A thermal storage assembly comprising:
an accumulator tank (1) comprising a first thermal connection (3a) and a second thermal connection (3b);
wherein the first thermal connection (3a) is controllably connectable to a feed conduit (42) of a district heating grid (40) or to a return conduit (54) of a district cooling grid (50) via a first valve arrangement (10), and
wherein the second thermal connection (3b) is controllably connectable to a feed conduit (52) of a district cooling grid (50) or to a return conduit (44) of a district heating grid (40) via a second valve arrangement (20); and
a controller (30) configured to control the first valve arrangement (10) and second valve arrangement (20) such that either:
the first thermal connection (3a) and the feed conduit (42) of the district heating grid (40) are in thermal connection with each other and the second thermal connection (3b) and the return conduit (44) of the district heating grid (40) are in thermal connection with each other, or
the first thermal connection (3a) and the return conduit (54) of the district cooling grid (50) are in thermal connection with each other and the second thermal connection (3b) and the feed conduit (52) of the district cooling grid (50) are in thermal connection with each other.

2. The thermal storage assembly according to claim 1, further comprising a first heat exchanger (2a) connectable to the feed conduit (42) and/or return conduit (44) of the district heating grid (40) on one side of the heat exchanger (2a) and connectable to the feed conduit (52) and/or return conduit (54) of the district cooling grid (50) on the other side of the heat exchanger (2a).

3. The thermal storage assembly according to claim 2, further comprising a second heat exchanger (2b),
wherein the first heat exchanger (2a) is connectable to the feed conduit (42) and return conduit (44) of the district heating grid (40) on one side of the heat exchanger (2a) and the accumulator tank (1) on the other side of the heat exchanger (2a); and
the second heat exchanger (2b) is connectable to the feed conduit (52) and return conduit (54) of the district cooling grid (50) on one side of the heat exchanger (2b) and the accumulator tank (1) on the other side of the heat exchanger (2b).

4. The thermal storage assembly according to any one of the previous claims, wherein the first valve arrangement (10) comprises a first valve (11) connecting the first thermal connection (3a) to the feed conduit (42) of the district heating grid (40), a second valve (12) controllably allowing fluid to flow from the return conduit (54) of the district cooling grid (50) to thermally connect it to the first thermal connection (3a) and a third valve (13) allowing fluid to flow from the first thermal connection (3a) to thermally connect it to the return conduit (54) of the district cooling grid (50); and
wherein the second valve arrangement (20) comprises a fourth valve (24) connecting the second thermal connection (3b) to the feed conduit (52) of the district cooling grid (50), a fifth valve (25) controllably allowing fluid to flow from the return conduit (44) of the district heating grid (40) to thermally connect it to the second thermal connection (3b) and a sixth valve (26) controllably allowing fluid to flow from the second thermal connection (3b) to thermally connect it to the return conduit (44) of the district heating grid (40).

5. The thermal storage assembly according to any one of the previous claims, further comprising at least one pump arrangement (60) configured to controllably increase the pressure of the return conduit (44) of the district heating grid (40) and/or the return conduit (54) of the district cooling grid (50).

6. The thermal storage assembly according to claim 5 depending on claim 4, comprising a second pump (62) connected to the second valve (12), such that the second pump (62) pumps fluid from the return conduit (54) of the district cooling grid (50) through the second valve (12) to thermally connect it to the first thermal connection (3a); and
a fifth pump (65) connected to the fifth valve (25), such that the fifth pump (65) pumps fluid from the return conduit (44) of the district heating grid (40) through the fifth valve (25) to thermally connect it to the second thermal connection (3b).

7. The thermal storage assembly according to any one of the previous claims, further comprising at least one pump arrangement (60) configured to controllably pump fluid from the accumulator tank (1).

8. The thermal storage assembly according to claim 7 depending on claim 4, comprising a first pump (61) connected to the first valve (11), such that the first pump (61) pumps fluid from the accumulator tank (1) to thermally connect it to the feed conduit (42) of the district heating grid (40); and
comprising a fourth pump (64) connected to the fourth valve (24), such that the fourth pump (64) pumps fluid from the accumulator tank (1) to thermally connect it to the feed conduit (52) of the district cooling grid (50).

9. The thermal storage assembly according to any one of the previous claims, wherein the first thermal connection (3a) is on the upper region of the accumulator tank (1), the upper region being hotter than the lower region; and
wherein the second thermal connection (3b) is on the lower region of the accumulator tank (1), the lower region being colder than the upper region.

10. A controller configured to control a first valve arrangement (10) and second valve arrangement (20) such that either:
a first thermal connection (3a) of an accumulator tank (1) is in thermal connection with a feed conduit (42) of a district heating grid (40) via the first valve arrangement (10) and a second thermal connection (3b) of an accumulator tank (1) is in thermal connection with a return conduit (44) of the district heating grid (40) via the second valve arrangement (20), or
the first thermal connection (3a) is in thermal connection with a return conduit (54) of a district cooling grid (50) via the first valve arrangement (10) and a second thermal connection (3b) is in thermal connection with a feed conduit (52) of the district cooling grid (50) via the second valve arrangement (20).

11. The controller according to claim 10, wherein the first valve arrangement (10) comprises a first valve (11) connecting the first thermal connection (3a) to the feed conduit (42) of the district heating grid (40), a second valve (12) controllably allowing fluid to flow from the return conduit (54) of the district cooling grid (50) to thermally connect it to the first thermal connection (3a) and a third valve (13) allowing fluid to flow from the first thermal connection (3a) to thermally connect it to the return conduit (54) of the district cooling grid (50); and
wherein the second valve arrangement (20) comprises a fourth valve (24) connecting the second thermal connection (3b) to the feed conduit (52) of the district cooling grid (50), a fifth valve (25) controllably allowing fluid to flow from the return conduit (44) of the district heating grid (40) to thermally connect it to the second thermal connection (3b) and a sixth valve (26) controllably allowing fluid to flow from the second thermal connection (3b) to thermally connect it to the return conduit (44) of the district heating grid (40);
wherein the controller (30) is configured to either: open the first valve (11) and second valve (12) while keeping the other valves (13, 24-26) closed, open the first valve (11) and third valve (13) while keeping the other valves (12, 24-26) closed, open the fourth valve (24) and fifth valve (25) while keeping the other valves (11-13, 26) closed, or open the fourth valve (24) and sixth valve (26) while keeping the other valves (11-13, 25) closed.

12. The controller according to claim 11, further configured to control a second pump (62) connected to the second valve (12), such that the second pump (62) pumps fluid from the return conduit (54) of the district cooling grid (50) through the second valve (12) to thermally connect it to the first thermal connection (3a); and to
control a fifth pump (65) connected to the fifth valve (25), such that the fifth pump (65) pumps fluid from the return conduit (44) of the district heating grid (40) through the fifth valve (25) to thermally connect it to the second thermal connection (3b).

13. The controller according to claim 11 or 12, further configured to control a first pump (61) connected to the first valve (11), such that the first pump (61) pumps fluid from the accumulator tank (1) to thermally connect it to the feed conduit (42) of the district heating grid (40); and to
control a fourth pump (64) connected to the fourth valve (24), such that the fourth pump (64) pumps fluid from the accumulator tank (1) to thermally connect it to the feed conduit (52) of the district cooling grid (50).

14. The controller according to any one of the claims 11 to 13, wherein the first thermal connection (3a) is on the upper region of the accumulator tank (1), the upper region being hotter than the lower region; and
wherein the second thermal connection (3b) is on the lower region of the accumulator tank (1), the lower region being colder than the upper region.
